**Europäisches Patentamt**

**European Patent Office**

**Office européen des brevets**

(19)

(11) Numéro de publication : **0 522 894 A1**

## DEMANDE DE BREVET EUROPEEN

(12)

(21) Numéro de dépôt : **92401486.3**

(22) Date de dépôt : **01.06.92**

(51) Int. Cl.[5] : **C01G 23/00, C04B 35/46**

(30) Priorité : **03.07.91 FR 9108289**

(43) Date de publication de la demande :
**13.01.93 Bulletin 93/02**

(84) Etats contractants désignés :
**DE FR GB NL**

(71) Demandeur : **RHONE-POULENC CHIMIE**
**25, quai Paul Doumer**
**F-92408 Courbevoie Cédex (FR)**

(72) Inventeur : **Nussbaum, Hubert**
**14 Lotissement le Colombier**
**F-60440 Boissy-Fresnoy (FR)**

(74) Mandataire : **Dubruc, Philippe et al**
**RHONE-POULENC CHIMIE Service**
**IOM/BREVETS, 25,quai Paul Doumer**
**F-92408 Courbevoie (FR)**

(54) **Compositions à base de titanates d'alcalino-terreux et/ou de terres rares et leur préparation.**

(57)  L'invention concerne des compositions à base de titanate et d'au moins un élément constitutif choisi parmi les terres rares ou les alcalino-terreux.

Le rapport molaire du titane à la somme des éléments constitutifs est supérieur à 1,1, si ces éléments sont des alcalino-terreux ou supérieur à 1, si ces éléments comprennent une terre-rare.

Ces compositions présentent une homogénéité telle que les domaines d'hétérogénéité sont inférieurs ou égaux à $1 \mu m^3$.

Les compositions sont obtenues par un procédé dans lequel on mélange un sol de $TiO_2$ avec les éléments constitutifs. On sèche le mélange et on calcine le produit séché. Les compositions ainsi préparées sont phasiquement pures.

EP 0 522 894 A1

La présente invention concerne des compositions à base de titanates d'alcalino-terreux et/ou de terres-rares, leur procédé d'obtention ainsi que leur utilisation à la préparation de matériaux frittés.

Au cours de ces dernières années, de nombreuses recherches ont été effectuées afin de mettre au point des procédés de préparation de céramiques de ce type.

En effet, celles-ci sont intéressantes pour de nombreuses applications mettant en oeuvre leurs propriétés diélectriques, comme par exemple les résonateurs diélectriques hyperfréquence.

Les produits utilisables comme résonateurs doivent répondre à des spécifications bien précises sur les paramètres suivants : la constante diélectrique qui doit être stable en fonction de la température, le facteur de qualité qui doit être élevé, le coefficient de température $t_f$ qui doit être faible, de préférence il doit être proche de O, et dont la valeur doit être modulable autour de O.

Enfin, ces produits doivent présenter, après frittage, une densité élevée.

Le procédé de synthèse de ces céramiques le plus couramment utilisé est le chamottage qui consiste à faire réagir en phase solide, à haute température, les différents oxydes et/ou les différents sels contenant un anion volatil, du type carbonate par exemple, des éléments constitutifs de la phase désirée.

Un tel procédé, notamment dans le cas des titanates mixtes alcalino-terreux/terre rare ne permet généralement pas d'obtenir des produits totalement satisfaisants pour ce qui concerne les paramètres évoqués plus haut.

Par ailleurs, le procédé par chamottage manque de souplesse pour moduler le coefficient $t_f$. Il est souvent nécessaire, pour faire varier ce coefficient, de modifier légèrement la composition, en jouant par exemple sur les rapports stoechiométriques des éléments. La variation des paramètes de procédé, si elle permet parfois de moduler $t_f$, entraîne là-aussi une modification souvent défavorable de la constante diélectrique.

Enfin, les schémas de cristallisation des produits répondant aux compositions visées sont complexes, ce qui explique qu'il se forme, lors de la réaction en phase solide, des phases intermédiaires importantes, de sorte qu'il n'est pas possible pour ce type de réaction d'obtenir des produits finals purs phasiquement et homogènes chimiquement. On constate ainsi la présence de phases parasites, comme par exemple le dioxyde de titane sous la forme rutile, dont la présence a des conséquences néfastes sur les propriétés finales des produits et dont l'élimination est difficile, voire impossible.

Un premier objet de l'invention est de proposer des compositions à base de titanate, d'alcalino-terreux et/ou de terres rares pouvant conduire à la préparation de produits frittés présentant des caractéristiques diélectriques optimales.

Un second objet de l'invention est la mise au point d'un procédé permettant de préparer de telles compositions et suffisamment souple pour pouvoir moduler le coefficient de température des produits frittés obtenus à partir de ces compositions.

Dans ce but, l'invention concerne une composition à base de titanate comprenant au moins un élément constitutif choisi parmi les alcalino-terreux. Ladite composition est caractérisée en ce qu'elle présente un rapport molaire du titane à la somme des éléments constitutifs de celle-ci supérieur à 1,1, et en ce qu'elle présente une homogénéité telle que les domaines d'hétérogénéité sont inférieurs ou égaux à $1\mu m^3$.

Selon une autre variante, l'invention concerne une composition à base de titanate comprenant au moins un élément constitutif choisi parmi les terres-rares, avec, éventuellement, au moins un alcalino-terreux. Cette composition est caractérisée en ce qu'elle présente un rapport molaire du titane à la somme des éléments constitutifs de celle-ci supérieur à 1, et en ce qu'elle présente une homogénéité telle que les domaines d'hétérogénéité sont inférieurs ou égaux à $1\mu m^3$.

Selon une troisième variante, l'invention concerne par une composition à base de titanate comprenant en tant qu'éléments constitutifs, au moins une terre-rare et au moins un alcalino-terreux. Ladite composition est caractérisée en ce que le rapport molaire du titanate à la somme des éléments constitutifs est compris entre 1 et 2 et en ce qu'elle est exempte de dioxyde de titane sous la forme rutile.

Un autre objet de la présente invention concerne le procédé de préparation d'une composition à base de titanate comprenant au moins un élément constitutif choisi parmi les alcalino-terreux, caractérisé en ce que l'on effectue les étapes suivantes :

- on prépare un mélange comprenant un sol de dioxyde de titane et les éléments constitutifs de ladite composition, le rapport molaire du titane à la somme des éléments précités étant supérieur à 1,1;
- on sèche ledit mélange
- on calcine le produit séché.

L'invention concerne de même un procédé de préparation d'une composition à base de titanate comprenant au moins un élément constitutif choisi parmi les terres-rares avec, éventuellement, au moins un alcalino-terreux, caractérisé en ce que l'on effectue les étapes suivantes :

- on prépare un mélange comprenant un sol de dioxyde de titane et les éléments constitutifs de ladite composition, le rapport molaire du titane à la somme des éléments précités étant supérieur à 1;

- on sèche ledit mélange
- on calcine le produit séché.

Enfin, un dernier objet de l'invention est constitué par un matériau fritté caractérisé en ce qu'il est obtenu par frittage d'une composition à base de titanate selon l'invention ou obtenue par les procédés mentionnés auparavant.

Mais d'autres caractéristiques et avantages apparaîtront plus clairement à la lecture de la description, des exemples et des figures annexées pour lesquelles :

- la figure 1 représente le diffractogramme des rayons X du titanate de composition $BaO.Sm_2O_3.4,7TiO_2$;
- la figure 2 représente le diffractogramme des rayons X du titanate de formule $BaTi_4O_9$.

La présente invention s'applique donc à des compositions à base de titanate, c'est-à-dire de composés dans lesquels le titane est au degré d'oxydation (4).

Par ailleurs, outre le titane, les compositions comprennent divers éléments constitutifs dans des proportions particulières vis-à-vis du titane.

Selon une première variante, la composition à base de titanate selon l'invention comprend au moins un élément constitutif choisi parmi les alcalino-terreux.

Par alcalino-terreux, on entend les éléments de la colonne 2A de la classification périodique des éléments.

On notera ici et pour toute la description, que la dénomination des colonnes de la classification périodique des éléments correspond à celle donnée par l'IUPAC dans son ouvrage "Nomenclature of Inorganic Chemistry" (Second Edition - Definitive Rules 1970).

De préférence, la composition selon l'invention comprend au titre d'alcalino-terreux, au moins un élément choisi parmi le baryum, le calcium et le strontium.

Selon cette première variante, le rapport molaire du titane à l'élément ou à la somme des éléments constitutifs de la composition est supérieur à 1,1.

Selon un mode de réalisation préféré de la première variante, le rapport molaire précité est supérieur à 1,5 et plus particulièrement supérieur à 2.

Une seconde variante de l'invention est constituée par une composition comprenant au moins un élément constitutif choisi parmi les terres-rares avec, éventuellement, au moins un alcalino-terreux.

Par terre-rare, on désigne les éléments de la classification périodique dont le numéro atomique varie de 57 à 71 ainsi que l'yttrium.

De préférence, ladite composition comprend au moins un élément choisi parmi le praséodyme, le néodyme, le samarium.

Dans un tel cas, le rapport molaire du titane à l'élément ou à la somme des éléments constitutifs est supérieur à 1.

Selon une réalisation préférée de la seconde variante, ledit rapport molaire est supérieur à 1,5.

Dans un premier mode de réalisation de cette variante, la composition selon l'invention comprend au moins un élément constitutif choisi parmi les terres-rares; le rapport molaire précité étant défini comme précédemment.

Dans un second mode de réalisation de cette variante, la composition selon l'invention comprend au moins une terre-rare et au moins un alcalino-terreux, en tant qu'éléments constitutifs; le rapport molaire étant défini comme précédemment.

Il est à noter que, selon un mode préféré de réalisation de l'invention, et cela pour chacune des deux variantes précitées, le rapport du titane à la somme des éléments constitutifs est inférieur ou égal à 10.

Dans le cadre de la première variante, l'invention s'applique notamment à des composés du type $ATi_4O_9$ avec A représentant au moins un alcalino-terreux, comme notamment $BaTi_4O_9$; $Ba_{1-x}Ca_xTi_4O_9$; $Ba_{1-x}Sr_xTi_4O_9$ avec x variant de 0 à 1.

On peut aussi citer les titanates dont la composition stoechiométrique de départ est la suivante :

$AO.4,2TiO_2$ avec A représentant au moins un alcalino-terreux, comme notamment $BaO.4,2TiO_2$.

L'invention s'applique aussi à la préparation de titanates dont les stoechiométries de départ correspondent à la deuxième variante : $BaO.Sm_2O_3.4,7TiO_2$; $BaO.Nd_2O_3.5TiO_2$; $BaO.Sm_2O_3.5TiO_2$; $Ba_xSr_{1-x}O.Sm_2O_3.4,7TiO_2$ et $BaO.Sm_{2(1-x)}Nd_{2x}O_3.5TiO_2$, x variant de 0 à 1; $Nd_2O_3.4TiO_2$.

Habituellement, les compositions selon l'invention se présentent éventuellement après broyage sous la forme d'une poudre dont la taille des particules est comprise entre 0,2 et 10μm.

Outre leurs différents éléments constitutifs et leurs proportions par rapport au titane, les compositions qui viennent d'être décrites présentent une homogénéité chimique telle que les domaines d'hétérogénéité sont inférieurs ou égaux à 1μm³.

Cette homogénéité est mesurée par la méthode de cartographie par spectroscopie à dispersion d'énergie (EDX) en utilisant une micro-sonde de microscopie électronique à balayage MEB.

Ainsi qu'il a été dit auparavant, les compositions selon l'invention sont phasiquement pures, comme le montre l'analyse par diffraction des rayons X. Le terme "phasiquement pures"indique que les compositions selon l'invention comprennent la phase ou les seules phases que laisse prévoir le diagramme de phases des éléments constitutifs desdites compositions.

Cependant, dans le cas particulier des compositions à base de titanate comprenant des éléments constitutifs choisis parmi les terres-rares et les alcalino-terreux, il existe deux possibilités, soit la composition est pure phasiquement, soit elle permet d'accéder à des compositions qui le son:. Dans ce dernier cas, les compositions à base de titanates ont une pureté phasique d'environ 50% à 80%, et de préférence d'environ 70 à 80%.

Le traitement thermique de telles compositions permet alors d'obtenir des matériaux phasiquement purs.

Plus particulièrement, et cela représente un autre objet de l'invention, les compositions à base de titanate comprenant des éléments constitutifs choisis parmi les terres rares et les alcalino-terreux, pour lesquelles le rapport titane sur la somme des éléments constitutifs est compris entre 1 et 2, et plus particulièrement entre 1 et 1,7, sont pures phasiquement et présentent en outre l'avantage d'être exemptes de dioxyde de titane sous la forme rutile. En d'autres termes, l'analyse par diffraction des rayons X ne permet pas de mettre en évidence ce composé.

Cet avantage est très important du fait des conséquences néfastes du dioxyde de titane sur les propriétés finales de la composition.

Bien entendu, les compositions de ce type peuvent en outre présenter les caractéristiques d'homogénéité de répartition, au sein de chaque grain, du titane et des éléments constitutifs de la composition telles que décrites plus haut.

Le procédé, selon l'invention, de préparation des compositions à base de titanates d'alcalino-terreux et/ou de terres rares va maintenant être décrit.

Celui-ci consiste à effectuer les étapes suivantes :
- on prépare un mélange comprenant un sol d'oxyde de titane et les éléments constitutifs de ladite composition;
- on sèche ledit mélange;
- on calcine le produit séché.

On entend par sol, une suspension colloïdale de particules de dioxyde de titane. Cette suspension est habituellement constituée de cristallites élémentaires de taille comprise entre 1 et 10 nm, agglomérées en amas submicroniques de taille variant entre 10 et 200 nm.

Généralement, le dioxyde de titane se présente sous la forme anatase.

On utilise un sol de $TiO_2$ à un pH évitant toute précipitation même après l'addition ultérieure des sels.

La teneur en dioxyde de titane est comprise habituellement entre 5 et 35% en poids. Selon un mode de réalisation particulier, on utilisera un sol dont la teneur en $TiO_2$ est d'environ 15%.

Les sols de titane tels que définis plus haut peuvent être obtenus par peptisation d'un gel de dioxyde de titane ayant les mêmes tailles de cristallites élémentaires que le sol désiré mais pouvant comporter des amas microscopiques de l'ordre du micron.

Classiquement, et à titre d'exemple, lesdits sols sont préparés par attaque sulfurique de l'ilménite.

Dans ce cas, sa teneur en ions sulfate varie entre 3 et 15% en poids et de préférence entre 6 et 8% en poids et son acidité est telle que le pH de la suspension aqueuse (300 g/l exprimé en $TiO_2$) est comprise entre 1 et 3.

On peut également préparer ce type de sol par hydrolyse à chaud d'une solution sulfurique d'oxychlorure de titane, cet oxychlorure de titane provenant de $TiCl_4$.

On peut citer aussi un second mode de préparation d'un sol de titane décrit dans la demande de brevet français FR 2 633 604 dont l'enseignement est incorporé ici. Ce procédé consiste à hydrolyser un composé du titane exempt de soufre en présence d'au moins un composé organique choisi parmi des acides comprenant soit un groupement carboxyle et au moins deux groupements hydroxyles et/ou amines, soit au moins deux groupements carboxyles et au moins un groupement hydroxyle et/ou amine.

A titre d'exemple, on utilise comme composé du titane, des halogénures ou oxyhalogénures comme le chlorure de titane, ou l'oxychlorure de titane plus particulièrement.

En ce qui concerne le composé organique, on peut utiliser les acides hydroxypolycarboxyliques ou leurs sels comme les acides malique, tartronique ou citrique.

Il est aussi possible d'utiliser les acides (polyhydroxy)monocarboxyliques comme notamment l'acide gluconique, les acides poly(hydroxycarboxyliques), comme par exemple l'acide tartrique, ainsi que leurs sels.

On peut encore citer les aminoacides ou leurs sels, comme l'acide glutamique, la lysine, la sérine.

La concentration du composé de titane varie habituellement entre 0,1 et 1,5 mole/l et celle du composé organique est habituellement comprise entre 0,002 et 0,5 mole/l.

Il est à noter que l'on peut effectuer l'hydrolyse en présence de germes d'anatase.

Le solide récupéré après l'hydrolyse peut être lavé puis remis en suspension dans une solution aqueuse

4

acidifiée.

Outre le sol de titane, le mélange comprend le ou les éléments constitutifs de la composition désirée, décrits auparavant.

Généralement, ceux-ci sont utilisés sous la forme d'une solution. De préférence, ladite solution est une solution aqueuse.

On ne sortirait toutefois pas du cadre de la présente invention en mettant en oeuvre les éléments constitutifs de la composition précurseur en milieu organique ou dans un mélange eau/ composé organique, dans la mesure où lesdits éléments sont présents sous la forme d'une solution.

Ces derniers sont habituellement présents sous la forme de sels d'acides organiques ou inorganiques.

Tous les acides inorganiques ou organiques conviennent à la mise en oeuvre du procédé dans la mesure où, comme il a été dit plus haut, ils forment des sels solubles dans le milieu avec tous les éléments constitutifs de la composition.

Toutefois, selon un mode de réalisation particulier, on choisit les nitrates, les sulfates et/ou les chlorures, comme sels d'acides inorganiques. De préférence, on met en oeuvre le procédé de l'invention avec les nitrates des éléments constitutifs.

Concernant les sels d'acides organiques et selon un second mode particulier de l'invention, ceux-ci sont choisis parmi les sels d'acides carboxyliques aliphatiques saturés ou parmi les sels d'acides hydroxycarboxyliques.

Ainsi, au titre d'acides carboxyliques aliphatiques saturés, on peut citer les formiates, les acétates, les propionates.

Quant aux acides hydroxycarboxyliques, on utilise habituellement les citrates.

Les concentrations de la solution des divers sels des éléments sont ajustées selon la stoechiométrie de la composition précurseur désirée.

Ainsi, on rappelle que dans le cas de la première variante de l'invention, le rapport molaire du titane à l'élément constitutif de la composition ou la somme de ces derniers est supérieur à 1,1, plus particulièrement supérieur à 1,5 et de préférence supérieur à 2.

Dans les cas de la seconde et de la troisième variante de réalisation, ce rapport est supérieur à 1 et de préférence supérieur à 1,5.

En général, les concentrations des solutions des sels des éléments précités sont comprises entre 0,1 et 5M.

On procède ensuite au séchage du mélange résultant selon toute méthode connue.

On pourra donc sécher ledit mélange par atomisation classique ou nébulisation.

Cependant, selon un mode particulier, on sèche le mélange par atomisation.

Plus particulièrement, on effectue le séchage par injection du mélange précité dans un gaz dont la vitesse est suffisante pour atomiser celui-ci.

Ainsi, selon un mode de réalisation préféré de l'invention, le séchage est effectué dans un réacteur "flash", par exemple du type mis au point par la Demanderesse et décrit notamment dans les brevets français n° 2 257 326, 2 419 754, 2 431 321. Dans ce cas, les gaz :ont animés d'un mouvement hélicoïdal et s'écoulent dans un puits-tourbillon. La suspension est injectée suivant une trajectoire confondue avec l'axe de symétrie des trajectoires hélicoïdales des gaz, ce qui permet de transférer parfaitement la quantité de mouvement des gaz aux particules de cette suspension. Par ailleurs, le temps de séjour des particules dans le réacteur est extrêmement faible, il est en général inférieur à 1/10 de seconde, ce qui supprime tout risque de surchauffe par suite d'un contact trop long avec les gaz.

Selon les débits respectifs des gaz et de la suspension, la température d'entrée des gaz est comprise entre 400 et 800°C, la température du solide séché entre 120 et 300°C.

On obtient un produit sec présentant, éventuellement après broyage, une granulométrie comprise entre 0,2 et 10 microns, et plus particulièrement entre 0,2 et 5$\mu$m.

En ce qui concerne le réacteur flash mentionné plus haut, on pourra se référer à la figure 1 de la demande de brevet français n°2 431 321.

Ledit réacteur est constitué d'une chambre de combustion et d'une chambre de contact composée d'un bicône ou d'un cône tronqué dont la partie supérieure diverge. La chambre de combustion débouche dans la chambre de contact par un passage réduit.

La partie supérieure de la chambre de combustion est munie d'une ouverture permettant l'introduction de la phase combustible.

D'autre part la chambre de combustion comprend un cylindre interne coaxial, définissant ainsi à l'intérieur de celle-ci une zone centrale et une zone périphérique annulaire et présentant des perforations se situant pour la plupart vers la partie supérieure de ladite chambre. Celle-ci comprend au minimum six perforations distribuées sur au moins un cercle, mais de préférence sur plusieurs cercles espacés axialement. La surface totale des perforations localisées dans la partie inférieure de la chambre peut être très faible, de l'ordre de 1/10 à 1/100 de la surface totale des perforations dudit cylindre interne coaxial.

Les perforations sont habituellement circulaires et présentent une épaisseur très faible. De préférence, le rapport du diamètre de celles-ci à l'épaisseur de la paroi est d'au moins 5, l'épaisseur minimale de la paroi étant seulement limitée par les impératifs mécaniques.

Enfin, un tuyau coudé découche dans le passage réduit, dont l'extrémité s'ouvre dans l'axe de la zone centrale.

La phase gazeuse animée d'un mouvement hélicoïdal (par la suite phase hélicoïdale) est composée d'un gaz, généralement de l'air, introduit dans un orifice pratiqué dans la zone annulaire, de préférence cet orifice est situé dans la partie inférieure de ladite zone.

Afin d'obtenir une phase hélicoïdale au niveau du passage réduit, la phase gazeuse est de préférence introduite à basse pression dans l'orifice précité, c'est-à-dire à une pression inférieure à 1 bar et plus particulièrement à une pression comprise entre 0,2 et 0,5 bar au-dessus de la pression existant dans la chambre de contact.

La vitesse de cette phase hélicoïdale est généralement comprise entre 10 et 100 m/s et de préférence entre 30 et 60 m/s.

Par ailleurs, une phase combustible qui peut être notamment du méthane, est injectée axialement par l'ouverture précitée dans la zone centrale à une vitesse d'environ 100 à 150 m/s.

La phase combustible est enflammée par tout moyen connu, dans la région où le combustible et la phase hélioïdale sont en contact.

Par la suite le passage imposé des gaz dans le passage réduit se fait suivant un ensemble de trajectoires confondues avec des familles de génératrices d'un hyperboloïde. Ces génératrices reposent sur une famille de cercles, d'anneaux de petite taille localisées près et au-dessous du passage réduit, avant de diverger dans toutes les directions.

On introduit ensuite la substance à traiter sous forme de liquide par le tuyau précité.

Le liquide est alors fractionné en une multitude de gouttes, chacune d'elles étant transportée par un volume de gaz et soumise à un mouvement créant un effet centrifuge.

Habituellement, le débit du liquide est compris entre 0,03 et 10 m/s.

Le rapport entre la quantité de mouvement propre de la phase hélicoïdale à celui du liquide doit être élevé. En particulier il est d'au moins 100 et de préférence compris entre 1000 et 10000.

Les quantités de mouvement au niveau du passage réduit sont calculés en fonction des débits d'entrée du gaz et de la substance à traiter, ainsi que de la section dudit passage. Une augmentation des débits entraîne un grossissement de la taille des gouttes.

Dans ces conditions, le mouvement propre des gaz est imposé dans sa direction et son intensité aux gouttes de la substance à traiter, séparées les unes des autres dans la zone de convergence des deux courants.

La vitesse du liquide est de plus réduite au minimum nécessaire pour obtenir un flot continu.

Le rapport de la masse du liquide et du gaz est bien évidemment choisi en fonction de plusieurs facteurs comme la température du fluide et l'opération à effectuer, comme la vaporisation du liquide.

Il est à noter que cette représentation du réacteur "flash" n'est qu'un exemple et que d'autres réalisations sont envisageables.

Le produit séché est ensuite calciné.

Cette calcination a pour but d'obtenir un produit dans lequel les éléments rentrant dans sa composition ne sont plus présents qu'essentiellement sous forme d'oxydes; en d'autres termes, cette calcination permet l'élimination des anions des sels, par exemple des nitrates. Elle a ainsi pour but d'obtenir au moins en partie la ou les phases recherchées.

Généralement, la calcination est réalisée à une température inférieure à la température de début de frittage dilatométrique.

Selon une première variante, la calcination est effectuée plus particulièrement à une température comprise entre 800°C et 1150°C.

Généralement, ladite calcination est réalisée sous air ou oxygène ou sous un mélange air-oxygène, en atmosphère statique, ou sous balayage.

La durée de cette opération est habituellement comprise entre 2 et 10 heures.

Il est à noter qu'une étape de broyage préalable à la calcination n'est pas justifiée.

Toutefois, on ne sortirait pas du cadre de la présente invention en effectuant une telle opération.

De même, un cycle complexe comprenant une homogénéisation par broyages intermédiaires n'est pas nécessaire.

Une telle calcination, effectuée dans la gamme de température décrite plus haut, permet généralement d'obtenir dans le cas des compositions comprenant soit au moins un alcalino-terreux, soit au moins une terre-rare, en tant qu'éléments constitutifs, des compositions à base de titanate phasiquement pures.

Dans le cas particulier des compositions comprenant au moins une terre-rare en combinaison avec au moins un alcalino-terreux en tant qu'éléments constitutifs, et éventuellement pour certaines compositions ne comprenant qu'un ou que des alcalino-terreux, ces compositions calcinées sont plutôt dans certains cas à considérer comme étant des compositions intermédiaires.

En effet, lesdites compositions, calcinées aux températures indiquées plus haut, peuvent comprendre environ 70 à 80% de la composition finale désirée et elles permettent d'accéder par un traitement thermique ultérieur ou une calcination supplémentaire, comme notamment le frittage, à des compositions pures phasiquement. Par ailleurs, de telles compositions sont exemptes de dioxyde de titane dans le cas où le rapport du titane à la somme des éléments constitutifs est compris entre 1 et 2, et plus particulièrement entre 1 et 1,7.

Selon une seconde variante, la calcination est réalisée plus particulièrement à une température comprise entre 1200 et 1500°C, dans les conditions de durée et d'atmosphère données pour la première variante.

Si la calcination est effectuée conformément à cette seconde variante, les compositions selon l'invention sont pures phasiquement.

On notera ici que le procédé de l'invention permet d'obtenir des produits purs ce qui est d'autant plus surprenant qu'il s'agit d'un problème très important dans le cas de la préparation des titanates pour lesquels le rapport molaire Ti/Somme des éléments constitutifs est différent de 1. Lorsque ce rapport est égal à 1 ou se situe au proche voisinage de 1, l'apparition de phases parasites, outre $TiO_2$, provient essentiellement des matières premières. Ces phases parasites n'apparaissent généralement plus dans le produit final.

Au contraire, dans le cas où le rapport ci-dessus est supérieur à 1, la possibilité est élevée de former selon des processus de cristallisation différents, des phases intermédiaires plus importantes qui, elles, peuvent subsister dans le produit final. En outre, le risque de ségrégation des espèces chimiques est élevé quand on prépare des produits riches en titane.

L'invention concerne enfin un matériau fritté obtenu par traitement thermique d'une composition à base de titanate telle que décrite auparavant ou obtenue par les procédés décrits auparavant.

Le frittage de la composition est effectué d'une façon classique.

Ainsi, on peut fritter sous vide, sous air sous oxygène ou sous un mélange air-oxygène, à une température variant entre 1300 et 1500°C.

La durée du frittage est habituellement comprise entre 2 et 10 heures.

Avantageusement, une étape de broyage préalable au frittage n'est pas nécessaire.

Toutefois, dans le cas des compositions chimiquement pures à base de titane comprenant au moins une terre-rare et au moins un alcalino-terreux, une étape de broyage peut être réalisée.

Habituellement, cette opération est effectuée avec un broyeur à boulets ou encore un broyeur type jet d'air.

Généralement, avant le frittage, le produit est mis en forme par compression en présence éventuellement d'un liant.

Il est bien entendu possible, préalablement au frittage, d'incorporer des additifs bien connus aux compositions, afin de modifier ou d'améliorer les caractéristiques du matériau final, comme par exemple le facteur de qualité, la stabilité thermique, la constante diélectrique.

A titre d'exemple, on peut citer des composés de l'étain, du manganèse, du néodyme, du tungstène.

Généralement, la teneur de ces additifs dans les compositions varie entre quelques dizaines de ppm et quelques pourcents.

Des exemples concrets mais non limitatifs vont maintenant être présentés.

Auparavant, il est rappelé que la mesure de la densité hydrostatique dans le pétrole est effectuée selon la procédure suivante (NF T 51-063) :
- on pèse l'échantillon à sec : $M_1$
- on immerge l'échantillon dans un bain de pétrole, sous vide et jusqu'à ce qu'il n'y ait plus de bulles dans la solution ou sur l'échantillon, c'est-à-dire pendant une durée d'environ une demi-heure.
- on pèse l'échantillon dans le pétrole : $M_2$
- on pèse l'échantillon imbibé de pétrole, séché sommairement au préalable : $M_3$.

La densité hydrostatique dans le pétrole est donnée par la formule suivante :

$$d_e = \frac{M_1\, dp}{M_3 - M_2}$$

dp étant la densité du pétrole.

EXEMPLE 1 - Synthèse de $BaO.Sm_2O_3.4,7TiO_2$

On prépare une solution de 25 g de $Sm(NO_3)_3$, $6H_2O$; de 7,35 g de $Ba(NO_3)_2$ dans 250 g d'eau.

On ajoute ensuite à cette solution 10,48 g de dioxyde de titane obtenu par thermohydrolyse de $TiOCl_2$ en présence d'acide sulfurique.

Le dioxyde de titane se présente sous la forme d'un sol aqueux de $TiO_2$ de concentration de 12,1% en poids en titane et dont le pH est de 1,7.

La suspension résultante est séchée avec un atomiseur de type BUCHI dans les conditions suivantes :
- température entrée      : 230°C
- température sortie      : 160°C
- débit de la pompe      : 6 ml/mn
- pression      : 0,8 bar

La poudre séchée est ensuite calcinée pendant 2 heures à 1350°C (vitesse de montée en température : 10°C/mn).

L'analyse par diffraction des rayons X (raie $K\alpha_1$ du cuivre) indique que le titanate obtenu lors de ladite calcination est phasiquement pur (voir figure 1).

Le tableau 1 ci-dessous indique l'évolution des phases cristallines principales en fonction de la température (analyse par diffraction des rayons X).

## Tableau 1

| | $Sm_2O_3$ | $Sm_2Ti_2O_7$ | $BaTiO_3$ | $BaO, Sm_2O_3, 4,7TiO_2$ |
|---|---|---|---|---|
| 800°C | 0 | 0 | 0 | X |
| 900°C | ↓ | ↑ | ↓ | 0 |
| 1000°C | X | ↓ | X | ↑ |
| 1100°C | X | ↓ | X | ↑ |
| 1250°C | X | X | X | ↑ |
| 1350°C | X | X | X | ↑ |

X : non détecté

0 : début d'apparition

↑ : croissance

↓ : décroissance

A titre de comparaison entre la voie chimique et celle dite "de chamottage", on pourra se référer à la publication de JM.WU et collaborateurs, parue au Journal of American Ceramic Society, 73 [6], 1990, pages 1599-605.

Cet article, portant notamment sur l'étude du mécanisme d'obtention, indique clairement que la phase de composition $BaO.Sm_2O_3.5TiO_2$ ne se forme qu'avec l'apparition de sous-produits comme $TiO_2$ rutile et $Ba_2Ti_9O_{20}$.

En ce qui concerne le taux de dioxyde de titane, celui-ci ne peut être diminué au-delà de 3%, avec pour contre-partie l'augmentation du taux de $Ba_2Ti_9O_{20}$.

Enfin, cet article montre que les teneurs de ces deux impuretés peuvent être diminuées en contrôlant les conditions de calcinations et de frittage. Cependant, il n'est pas possible d'obtenir des produits contenant moins de 12% d'impuretés.

L'analyse MEB-EDX montre que le produit de l'invention calciné à 1000°C est homogène grain à grain et qu'il présente une homogénéité en composition à l'échelle du $\mu m^3$.

La composition obtenue après calcination à 1000°C à 2 heures est ensuite frittée selon le procédé suivant :

On pèse environ 1 g de poudre auquel on ajoute à titre de liant une goutte de Rhodoviol 4/20 ® à 10%.

Après homogénéisation dans un mortier en agathe, on place le mélange dans la pastilleuse.

- surface de la pastille     : 2 cm$^2$
- pression     : 2 tonnes/cm$^2$
- temps de pressage     : 60 secondes.

On chauffe sous air la pastille à 1350°C pendant 3 heures (vitesse de montée en température : 3°C/mn).

La densité finale du matériau fritté, mesuré comme indiqué auparavant, est de 5,60. Il est à noter que la densité est supérieure à celle donnée dans la publication citée auparavant.

EXEMPLE 2 - Synthèse de BaO.Sm$_2$O$_3$.4,7TiO$_2$

Preparation

On dissout 1508 g de nitrate de baryum dans 10 kg d'eau à 80°C.

On ajoute à ce mélange, 8146 g d'une solution aqueuse de nitrate de samarium (à 21,1% poids en Sm). La température du mélange est maintenue à 80°C.

On ajoute alors 11012 g d'un sol de TiO$_2$ (à 11,6% en poids en Ti).

La suspension ainsi obtenue est séchée dans un réacteur "flash", du type décrit précédemment, dans les conditions suivantes :
- pression 0,8 bar
- température d'entrée : 750°C
- température dp sortie : 170°C

La poudre séchée est calcinée à 1250°C pendant 2 heures (vitesse de montée en température : 10°C/mn).

Le diffractogramme des rayons X indique que la phase est pure (diffractogramme identique à la figure 1).

L'analyse MEB-EDX de la poudre calcinée à 1150°C en 2 heures montre que le produit est homogène grain à grain et qu'il présente une homogénéité en composition à l'échelle du µm$^3$.

La même poudre obtenue après calcination à 1150°C en 2 heures est frittée selon la procédure décrite à l'exemple 1 et on obtient une densité de 5,6.

La phase frittée à 1350°C est pure (diffractogramme des rayons X identique à la figure 1).

EXEMPLE 3 - Synthèse de BaTi$_4$O$_9$

On prépare à 80°C une solution comprenant 4723,8 g d'eau, 726,7 g de Ba(NO$_3$)$_2$.

On ajoute ensuite à cette solution 4549,5 g de dioxyde de titane sous la forme d'un sol aqueux comprenant 19% de titane.

On sèche la suspension résultante dans un atomiseur "flash" du type de celui décrit.

Les conditions de séchage sont les suivantes :
- température entrée : 750°C
- température sortie : 150°C
- pression : 0,8 bar.

La poudre séchée est calcinée à 1000°C pendant 3 heures (vitesse de montée en température : 10°C/mn).

L'analyse par diffraction des rayons X indique que le titanate obtenu est pur (voir figure 2).

L'analyse MEB-EDX montre que le produit est homogène grain à grain et qu'il présente une homogénéité en composition à l'échelle du µm$^3$.

Le titanate est ensuite pastillé selon le même mode opératoire que celui de l'exemple 1, puis fritté à une température de 1300°C pendant 3 heures (vitesse de montée en température : 3°C/mn).

La densité du matériau avant frittage est de 55% de la densité théorique.

La densité du matériau fritté, mesurée dans le pétrole, est de 4,37, soit 97% de la densité théorique.

EXEMPLE 4 - Synthèse de (BaO$_{0,95}$-SrO$_{0,05}$).Sm$_2$O$_3$.4,7TiO$_2$

On dissout 1436 g de nitrate de baryum dans 10 kg d'au à 80°C.

On ajoute à ce mélange 8169 g d'une solution aqueuse de nitrate de samarium (à 21,1% en poids de Sm). La température du mélange est maintenue à 80°C.

On ajoute alors 11044 g de sol de TiO$_2$ (à 11,6% en poids de Ti).

On procède ensuite au séchage, à la calcination à 1150°C en 2 heures et au frittage dans les mêmes conditions que celles de l'exemple 2.

Le produit fritté présente une densité égale à 98% de la densité théorique.

La phase est pure.

EXEMPLE 5 - Synthèse de $BaO.(Nd_{0,8}Sm_{1,2})O_3.5TiO_2$

Les matières premières utilisée pour cette synthèse sont

```
     - le nitrate de baryum Ba(NO3)2           :  58,3 g
     - le nitrate de samarium Sm(NO3)3,6H2O  : 119 g
     - une solution de nitrate de Néodyme
       (à 21,30% en poids de Nd)               : 120,8 g
     - un sol de TiO2 (à 12,10% de Ti)         : 441,5 g
```

Ces matières premières sont mélangées avec une quantité d'eau telle que la solution aqueuse obtenue est à 20% en poids en sels et sol. La solution est chauffée à 80°C.

La solution est séchée à l'aide d'un atomiseur de laboratoire BUCHI.

- température entrée : 230°C
- température sortie : 160°C
- débit pompe : 6 ml/mn
- pression : 0,8 bar

La poudre ainsi obtenue est calcinée à 1350°C 2 heures (vitesse de chauffe 10°C/mn).

L'analyse par diffraction des rayons X indique que le titanate obtenu, lors de la calcination, est phasiquement pur.

L'analyse MEB-EDX de la poudre obtenue après calcination de 2 heures à 1000°C montre que le produit est homogène grain à grain et qu'il présente une homogénéité en composition à l'échelle du $\mu m^3$.

La même poudre calcinée à 1000°C pendant 2 heures est ensuite frittée, selon le même procédé que celui de l'exemple 1, à 1350°C 3 heures (vitesse de chauffe 3°C/mn).

La densité du produit fritté est de 5,5 $g/cm^3$.

EXEMPLE 6

Cet exemple illustre les propriétés diélectriques des produits de l'invention.

On prépare un produit selon l'exemple 2 calciné à 1150°C et en réalisant un frittage sous oxygène de 3 heures à 1350°C (Essai 1) ou à 1370°C (Essai 2), les autres conditions du frittage étant identiques à celles décrites dans l'exemple 2.

On prépare de même un produit selon l'exemple 4 par frittage sous oxygène de 3 heures à 1350°C (Essai 3) ou à 1370°C (Essai 4) et sous oxygène, les autres conditions du frittage étant identiques à celles décrites dans l'exemple 4.

Les densités des produits obtenues sont les mêmes que celles données aux exemples 2 et 4, elles ne varient pas avec la température de frittage.

Les caractéristiques diélectriques sont données dans le tableau 2 ci-dessous :

EP 0 522 894 A1

Tableau 2

| Essai n° | 1 | 2 | 3 | 4 |
|---|---|---|---|---|
| Constante diélectrique | 76,5 | 76,2 | 78,9 | 78,4 |
| Coefficient de température tf (ppm/°C) | -7,8 | -0,4 | -5,7 | +3,7 |
| Facteur de qualité | 3545 | 5574 | 4878 | 5204 |
| QXF (GHZ) | 6570 | 10150 | 8908 | 9441 |

La constante diélectrique a été mesurée aux alentours de 2200 MHZ, la valeur QXF a été mesurée aux environs de 1800 MHZ.

On peut constater que la simple variation de la température de frittage permet de faire varier le coefficient de température sans modifier sensiblement la constante diélectrique et la densité.

**Revendications**

**1 -** Composition à base de titanate et d'au moins un élément constitutif choisi parmi les alcalino-terreux, caractérisée en ce qu'elle présente un rapport molaire du titane à la somme des éléments constitutifs supérieur à 1,1 et une homogénéité telle que les domaines d'hétérogénéité sont inférieurs ou égaux à $1\mu m^3$.

**2 -** Composition à base de titanate comprenant au moins un élément constitutif choisi parmi les terres-rares, avec éventuellement, au moins un alcalino-terreux, caractérisée en ce qu'elle présente un rapport molaire du titane à la somme des éléments constitutifs supérieur à 1, et une homogénéité telle que les domaines d'hétérogénéité sont inférieurs ou égaux à $1\mu m^3$.

**3 -** Composition à base de titanate comprenant en tant qu'éléments constitutifs au moins une terre-rare et au moins un alcalino-terreux, caractérisée en ce qu'elle présente un rapport molaire du titane à la somme des terres-rares et des alcalino-terreux compris entre 1 et 2, et en ce qu'elle est exempte de dioxyde de titane sous forme rutile.

**4 -** Composition selon la revendication 3, caractérisée en ce qu'elle présente une homogénéité telle que les domaines d'hétérogénéité sont inférieurs ou égaux à $1\mu m^3$.

**5 -** Composition selon l'une des revendications précédentes, caractérisée en ce qu'elle présente un rapport molaire du titane à la somme des éléments constitutifs supérieur à 1,5.

**6 -** Composition selon la revendication 1, 2 et 4 à 5, caractérisée en ce qu'elle présente un rapport molaire du titane à la somme des éléments constitutifs supérieur à 2.

11

**7 -** Composition selon l'une des revendications 1, 2 et 4 à 6, caractérisée en ce que le rapport molaire du titane à la somme des éléments constitutifs est inférieur ou égal à 10.

**8 -** Composition selon l'une des revendications précédentes caractérisée en ce que la terre-rare est choisie parmi le praséodyme, le néodyme et le samarium.

**9 -** Procédé de préparation d'une composition à base de titanate comprenant au moins un élément constitutif choisi parmi les alcalino-terreux, caractérisé en ce que l'on effectue les étapes suivantes :

- on prépare un mélange comprenant un sol de dioxyde de titane et les éléments constitutifs de ladite composition, le rapport molaire du titane à la somme des éléments constitutifs étant supérieur à 1,1.
- on sèche ledit mélange
- on calcine le produit séché.

**10 -** Procédé de préparation d'une composition à base de titanate comprenant au moins un élément constitutif choisi parmi les terres-rare, avec éventuellement, au moins un alcalino-terreux, caractérisé en ce que l'on effectue les étapes suivantes :

- on prépare un mélange comprenant un sol de dioxyde de titane et les éléments constitutifs de ladite composition, le rapport molaire du titane à la somme des éléments constitutifs étant supérieur à 1,
- on sèche ledit mélange
- on calcine le produit séché.

**11 -** Procédé selon l'une des revendications 9 ou 10, caractérisé en ce que l'on utilise les éléments constitutifs sous la forme de sels d'acides organiques ou inorganiques.

**12 -** Procédé selon la revendication 11, caractérisé en ce que l'on utilise ledits éléments constitutifs sous la forme de nitrates, de chlorures ou de leur mélange.

**13 -** Procédé selon la revendication 12, caractérisé en ce que l'on utilise lesdits éléments constitutifs sous la forme de formiates, acétates, propionates, citrates, oxalates ou de leur mélange.

**14 -** Procédé selon l'une des revendications 9 à 13, caractérisé en ce que l'on sèche le mélange précité par atomisation.

**15 -** Procédé selon la revendication 14, caractérisé en ce que l'on sèche ledit mélange en l'injectant dans un gaz dont la vitesse est suffisante pour atomiser ledit mélange.

**16 -** Procédé selon la revendication 15, caractérisé en ce que l'on sèche ledit mélange par injection de celui-ci suivant une trajectoire confondue avec l'axe de symétrie d'un écoulement hélicoïdal et puits-tourbillon de gaz chauds.

**17 -** Matériau fritté, caractérisé en ce qu'il est obtenu par frittage d'une composition à base de titanate selon l'une des revendications 1 à 8 ou par frittage d'une composition obtenue par un procédé selon l'une des revendications 9 à 16.

Office européen
des brevets

**RAPPORT DE RECHERCHE EUROPEENNE**

Numero de la demande

EP    92 40 1486

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | EP-A-0 141 696 (RHONE-POULENC RECHERCHES)<br>* revendication 1; exemple 1 *<br>--- | 1,11 | C01G23/00<br>C04B35/46 |
| A | EP-A-0 193 460 (RHONE-POULENC SPECIALITES CHIMIQUES)<br>* revendication 1; exemples 1-3 *<br>--- | 1-3,<br>11-12 | |
| D,A | FR-A-2 633 604 (RHONE-POULENC CHIMIE)<br>* revendication 1 *<br><br>----- | 11 | |

**DOMAINES TECHNIQUES RECHERCHES (Int. Cl.5)**

C01G
C04B

Le présent rapport a été établi pour toutes les revendications

| Lieu de la recherche | Date d'achèvement de la recherche | Examinateur |
|---|---|---|
| BERLIN | 20 OCTOBRE 1992 | CLEMENT J-P. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

....................................................................

& : membre de la même famille, document correspondant

EPO FORM 1503 03.82 (P0402)